# EUROPEAN PATENT SPECIFICATION

(11) **EP 0 624 122 B1**
(45) Date of publication and mention of the grant of the patent: **10.06.1998**
(21) Application number: 93914512.4
(22) Date of filing: 01.02.1993
(51) Int. Cl.: B29C 45/17

(54) **APPARATUS FOR AND METHOD OF INJECTION MOULDING WITH GAS INJECTION**
Vorrichtung und Verfahren zum Spritzgiessen mit Gasinjektion
DISPOSITIF ET PROCEDE DE MOULAGE PAR INJECTION AU MOYEN D'INJECTION DE GAZ

(30) Priority: 30.01.1992 GB 9201989; 04.04.1992 GB 9207431; 26.05.1992 GB 9211144; 26.05.1992 GB 9211150
(43) Date of publication of application: 17.11.1994
(73) Proprietor: HAYWOOD HOLDINGS LIMITED, Cannock, Staffordshire WS11 3JU (GB)
(72) Inventor: PEARSON, Terence Colwyn, Nantwich, Cheshire CW5 5RL (GB)
(74) Representative: Downey, William Gerrard
(86) International application number: GB9300213
(87) International publication number: WO9314919

(56) References cited:
- EP-A- 0 321 117
- EP-A- 0 391 854
- EP-A- 0 485 726
- EP-A- 0 495 614
- WO-A-90/00466
- WO-A-90/06220
- JP-A- 3 286 814
- US-A- 4 164 523
- PATENT ABSTRACTS OF JAPAN vol. 9, no. 94 (M-374)(1817) 24 April 1985; & JP,A,59 220 338 ( ICHIKO KOGYO ) 11 December 1984
- PATENT ABSTRACTS OF JAPAN vol. 13, no. 305 (M-849)(3653) 13 July 1989; & JP,A,01 095 007 ( HONDA MOTOR ) 13 April 1989

## Description

The invention relates to apparatus for and method of injection moulding and in particular to gas-assisted or gas injection moulding.

During recent years there have been various developments of methods of injecting a fluid normally in gaseous form into molten synthetic plastics material as it enters or after it has filled an injection moulding tool cavity. The gas forms continuous channels or hollow sections within the plastic moulding.

The objectives of assisting the moulding process by the injection of gas into the plastic can include one or more of the following - reduction of weight by replacing plastic material with hollow gas channels, reduction in process cooling time, reduction in moulded-in stress, reduction or elimination of surface sink marks, combining thick and thin sections within a moulding design including the incorporation of webs, pillars and other design features, and more uniform pressurisation of the moulding as the plastic cools and solidifies.

In a known method gas is injected into the plastic at a number of alternative positions including the moulding machine nozzle, in the hot or cold sprue, in the plastic runners, or directly into the mould cavity. The gas is injected directly into the plastic when in a molten state and remains under pressure until the plastic has solidified, following which the gas is exhausted to atmosphere before the mould opens and the moulding is ejected from the mould.

There is a problem of preventing the molten plastic from flowing back into the gas injection device or hollow tube or pin before or after the injection of the gas takes place and when the pressure in the molten plastic is greater than the pressure applied to the gas from its external feed or pressure source. Some of the known methods require hydraulically or mechanically operated valves or other mechanisms within the moulding tools or moulding machines for the injection of the gas.

It is a prerequisite of gas-assisted moulding processes that the gas is evacuated and the pressure 15 relieved within the mould cavity before the mould is opened. If the gas is trapped within the moulding or runners at the time of ejection there can be an expansion of the plastic resulting from internal pressure which is sufficiently high can lead to explosion of the moulding or runners. It is therefore important that the gas can be exhausted and the gas channels are free from blockage with fragments of plastic or other material.

This invention seeks to achieve a more consistent and reliable injection of gas into the plastic at positions within the mould where it is easy to apply and capable of creating optimum results. The invention eliminates the necessity for hollow pins or comparatively expensive valve mechanisms which are used in other known methods. The invention requires no moving parts within the mould to enable the injection of gas into the lastic. The apparatus and method also provide means of exhausting the gas via the path of entry and the same spaces between the mould halves.

According to one aspect of the present invention, there is provided apparatus for injection moulding comprising a mould having two parts which may be placed together to define a mould cavity, means for feeding synthetic plastics material to the mould cavity, means for feeding gas under pressure to the mould cavity at a position displaced from the means for feeding synthetic plastics material such that the gas can be injected into the synthetic plastics material and for exhausting gas from the mould cavity, said means for feeding gas comprising means permitting passage of gas whilst preventing passage of synthetic plastics material characterised in that the mould has a formation around the means for feeding gas such that in operation of the mould a seal is formed by the synthetic plastics material to prevent the gas from escaping between the plastics and adjacent mould surface.

In a preferred embodiment of the apparatus of the invention, the means for permitting passage of gas whilst preventing passage of synthetic plastics matrials comprises a gap between shut out faces of adjacent mould parts which permits passage of gas but prevent passage of plastics. Alternatively the means for permitting passage of gas whilst preventing passage of synthetic plastics material comprises a porous insert. The formation may define a ring which surrounds the gas injection point.

According to another aspect of the present invention, there is provided a method of injection moulding including the steps of feeding synthetic plastics material to a mould cavity defined by a mould having two parts, feeding gas to the mould cavity under pressure at a position displaced from the plastics material feed whereby to pressurise plastics material in the mould and inject gas into the material, preventing plastics material from entering the gas feed, and exhausting the gas from the mould and opening the mould to remove the moulded product characterised in that gas is prevented from escaping between the plastics and adjacent mould surface by gas pressure urging synthetic plastics material against a mould surface to produce a seal.

In a preferred embodiment of the method of the invention, the pressure of gas is controlled in order to assist the moulding process. The timing of injection of the gas may also be controlled. Gas pressure may be applied within a sealed area to transmit pressure to plastics material outside that area to urge plastic material to compensate for shrinkage.

In order that the invention may be more clearly understood, embodiments thereof will now be described by way of example with reference to the accompanying drawings, in which:-
Figure 1a is a sectional view of one embodiment of moulding apparatus according to the invention,
Figure 1b is a sectional view along the line I-I of Figure 1a,
Figure 2a is a sectional view of another embodiment of moulding apparatus according to the invention,
Figure 2b is a sectional view along the line I-I of Figure 2a,
Figure 2c is a sectional view along the line II-II of Figure 2a,
Figure 3 is a sectional view of another embodiment of moulding apparatus according to the invention showing positioning of gas inlet point,
Figures 4a and 4b respectively show two modifications surrounding a gas inlet point,
Figure 5 shows a modification of the gas inlet of the moulding apparatus of Figures 1a and 1b,
Figure 6 shows an alternative to the modification of Figure 5,
Figure 7a shows a modification in section of the moulding apparatus of Figure 1,
Figure 7b shows a section of the modification of Figure 7a taken along the line I-I in figure 7a,
Figure 8 shows a further embodiment of moulding apparatus according to the invention,
Figure 9a is a partial view in section of a modified gas inlet point for the apparatus of Figure 8 prior to gas injection,
Figure 9b is a section along the line I-I of Figure 9a,
Figure 9c is a section along the line II-II of Figure 9a,
Figure 10a is a partial view corresponding to Figure 9a and showing the effect of gas injection,
Figures 10b and 10c are cross-sections corresponding to Figures 9b and 9c along the lines I-I and II-II on Figure 10a, and
Figures 11 to 15b show alternative gas injection arrangements employing a porous insert.

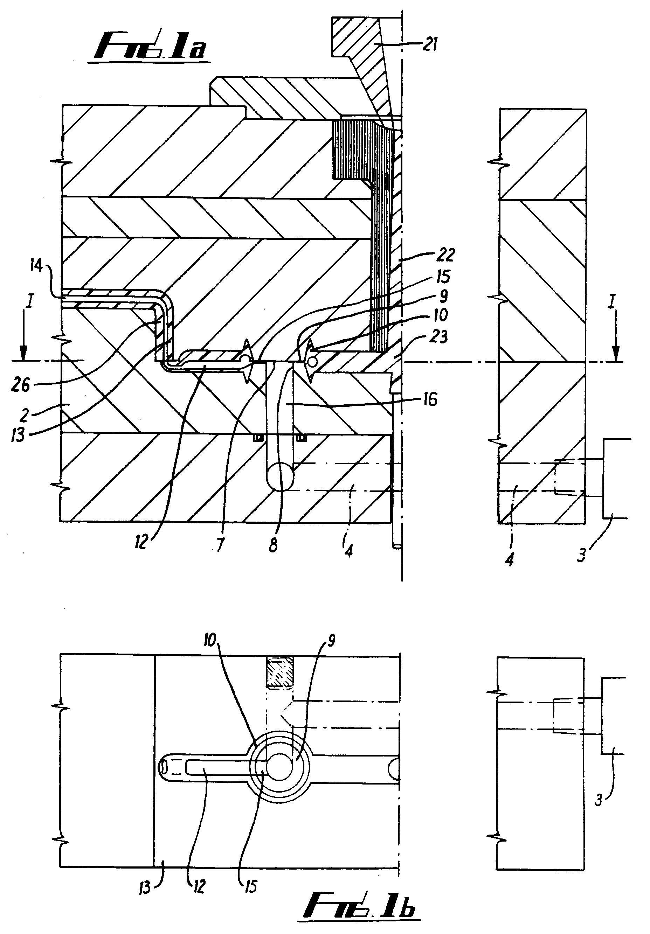

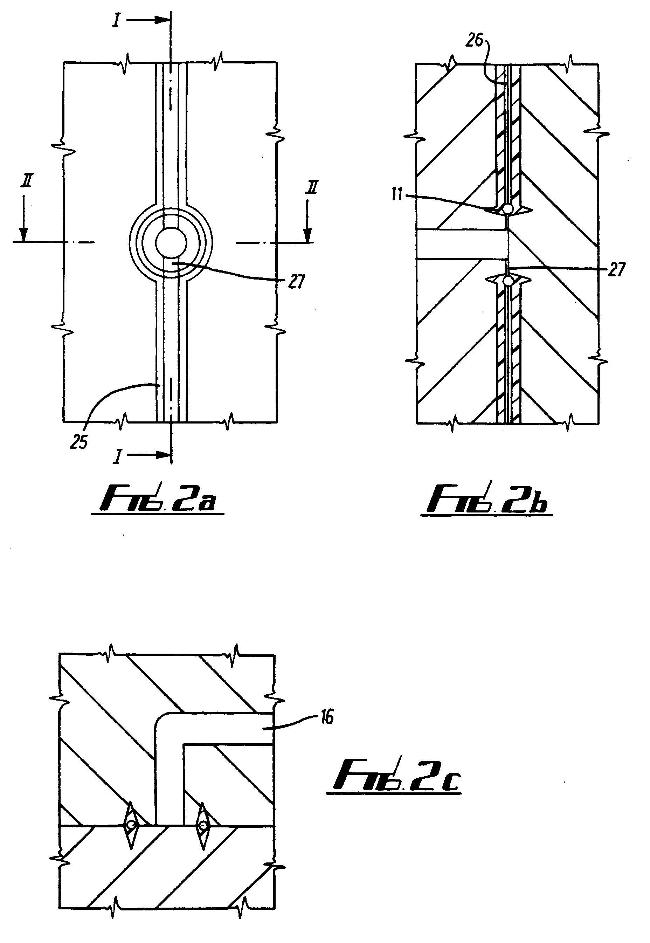

Referring to Figure 1a, 1b, 2a, 2b and 2c of the drawings, the apparatus for injection moulding comprises a mould having two mould parts or halves 1 and 2. A pressure source 3 communicates with the mould via a channel 4 within one half of the mould with an entry/exit 8 (or entries/exists) at the split-line 7 between the two mould halves 1,2. Entry/exit hole(s) 8 is/are surrounded by shutout faces 9 of the mould on the mould split-line 7 and then by a ring of plastic 10 formed either by splitting a runner to flow around the gas exit hole 6, or by positioning the gas hole(s) within a cored-out hole 11 in the moulding (see Figure 2b) when the gas exit hole is also surrounded by a shut-out surface and then by plastic. In both cases the surrounding plastic acts as a seal preventing the gas from leaking to atmosphere across the mould split-line and/or between the plastic and the mould cavity surface. As a result injected gas 12 will enter the molten plastic 13 when the pressure applied to the gas is greater than the pressure within the plastic, and is sufficient to break through the skin formed on the surface of the plastic material as it cools when in contact with the mould cavity surface.

As a further explanation of the method of forming an effective seal by the plastic surrounding the gas mould at the shut-out face at the mould split-line, it is noted that the gas will tend to flow between the mould surface and the inner surface of the plastic seal, but this will create additional pressure on the plastic forcing the seal section on the opposite face against the adjacent mould cavity surface, thereby creating a continuous seal which prevents the gas from flowing further between the plastic and the mould cavity surface.

The gas will then flow into the moulding forming continuous channels 14 within the molten plastic finding the path of least resistance in the thicker sections in a similar way to well established and known gas-assisted moulding practice.

After the plastic has cooled and solidified the external gas pressure is released to atmosphere or a receiving chamber at lower pressure and the gas within the cavity is exhausted via the path of entry i.e. through the gap between the mould halves on the split-line 7, and via the relieved vent areas 15 on the shut-out face 9, then into the gas hole 16, and then through the gas entry channel 4. The gas passes into the gap between the mould halves 1, 2 in the same way that air is conventionally vented from injection moulding cavities as the mould is filled with plastic. The gap between the mould halves at the vent areas 15 is typically between 0.002mm (0.0005") and 0.01mm (0.0025"), which is sufficient to allow gas to pass through but small enough to prevent the entry of the more viscous molten plastic.

Figure 2 shows the injection of gas within a general wall section and in line with a rib 25. It illustrates the formation of a gas channel in a rib 26. It also illustrates the use of relieved vents between the shut-out faces at 27.

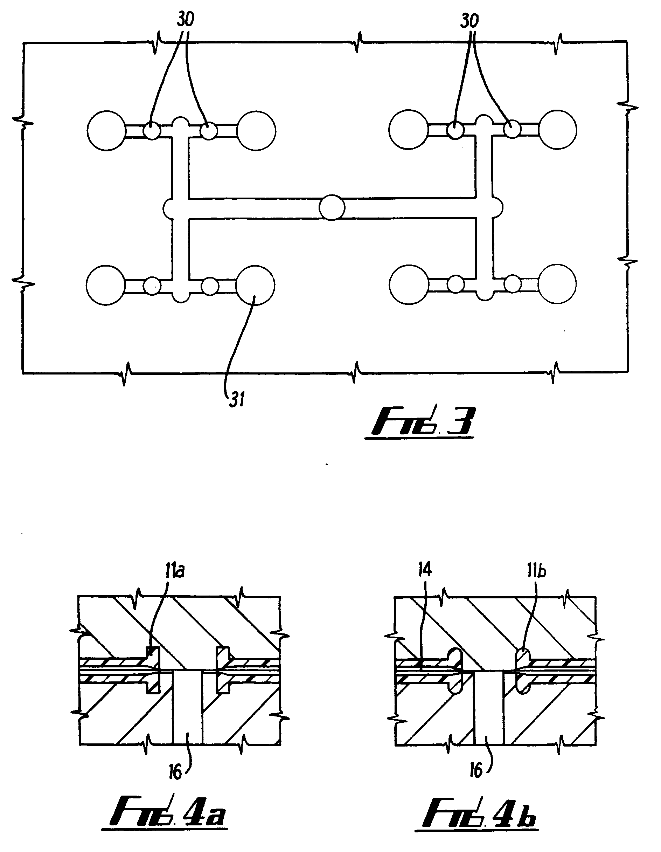

Figure 3 shows a general arrangement showing the positioning of gas inlet points 30 in an "8" impression mould (mouldings at 31) connected by a cold runner feed 32.

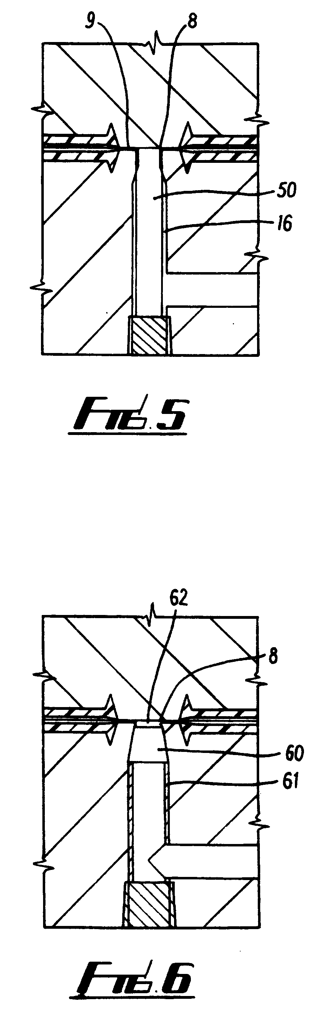

Gas is injected when the plastic surrounding the gas hole is still molten except for a skin which normally forms on the mould surface as plastic passes over it on entry into the mould. Pressure applied to the gas is sufficient to break through the skin and for the gas to enter the molten plastic. This is further assisted by locally thickening the section of the plastic ring 10 surrounding the gas hole thereby prolonging the solidification of the plastic. This enables the gas to pass into the moulding or other thicker sections forming continuous gas channels 14 throughout the moulding. It is preferable that the thickened section should be diamond or triangular in cross-section as illustrated in Figures 1a, 2b and 6, but other configurations may be used including rectangular sections (Figure 4a) or semi-circular sections (Figure 4b).

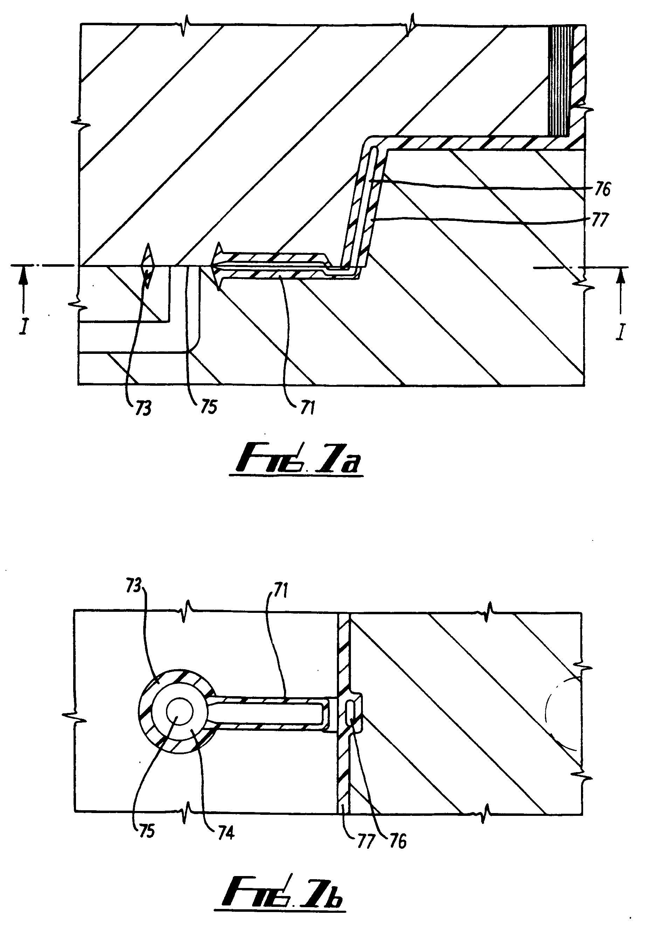

In order to safeguard against the malfunction of the mould or incorrect moulding procedure it may be desirable to prevent plastic from entering the gas entry/exit hole 8 if molten plastic is allowed to flash across the shut-out faces 9. Referring to Figure 5 an embodiment of this invention is therefore to fit a loose fitting core 50 within the gas entry channel at the point of the shut-out faces. The core will provide sufficient clearance between the core and the gas channel so that gas may pass between the two but the gap will be small enough to prevent the ingress of plastic into the gas exit hole.

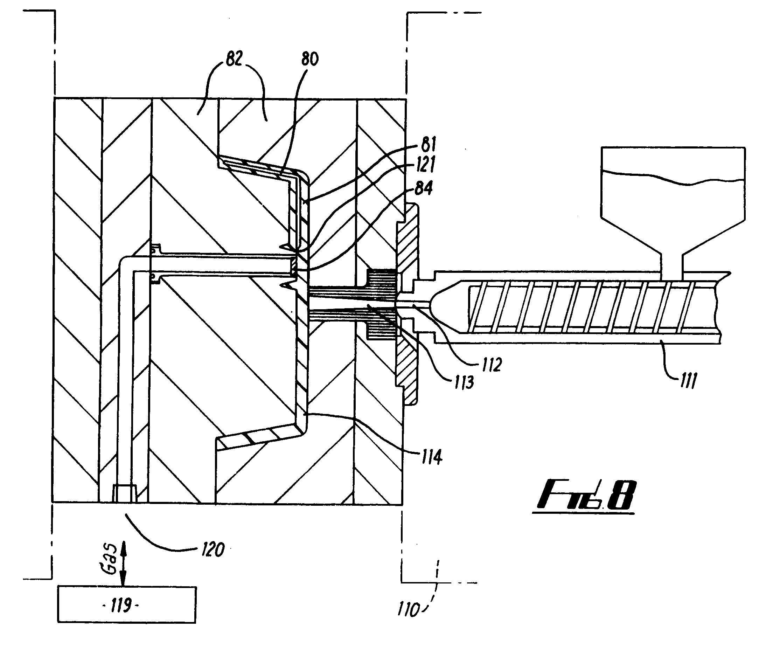

An alternative is to fit a porous insert 60 (see Figure 6) within the gas entry/exit hole 8 at the outlet point in order to facilitate the passage of gas but to prevent the ingress of molten plastic into the gas channel in the event of plastic flashing across the mould shut-out surfaces 9 surrounding the gas entry hole. The porous insert 60 is sufficiently porous to enable the passage of gas under pressure both into the mould during the moulding process and later during venting and exhausting of the gas before completion of the moulding cycle. The porous insert is preferably made of sintered metal, commonly steel or bronze, and of particle sizes between 5 and 50 microns. The example illustrated in Figure 6 shows the porous insert 60 to be of a truncated cone in format and fitted into a hole of similar shape and supported and held in position by a hollow tube 61. It is preferable, but not essential, that there should be clearance 62 between the porous insert and the other half of the mould to allow the free passage of gas.

Advantages resulting from these embodiments include easier and less costly conversion of moulds to gas injection moulding; less complicated and reduced risks of malfunction which may occur to gas valves, gas pins and other moving parts within the mould; a facility for increasing the number of gas injection points within the mould thereby improving gas distribution throughout larger mouldings and enabling gas entry points 30 to be applied to each cavity 31 of multi-cavity moulds as shown in Figure 3; less expense of installation by avoiding the cost of more complex gas injection and venting devices; less likelihood of plastic blocking the gas injection system.

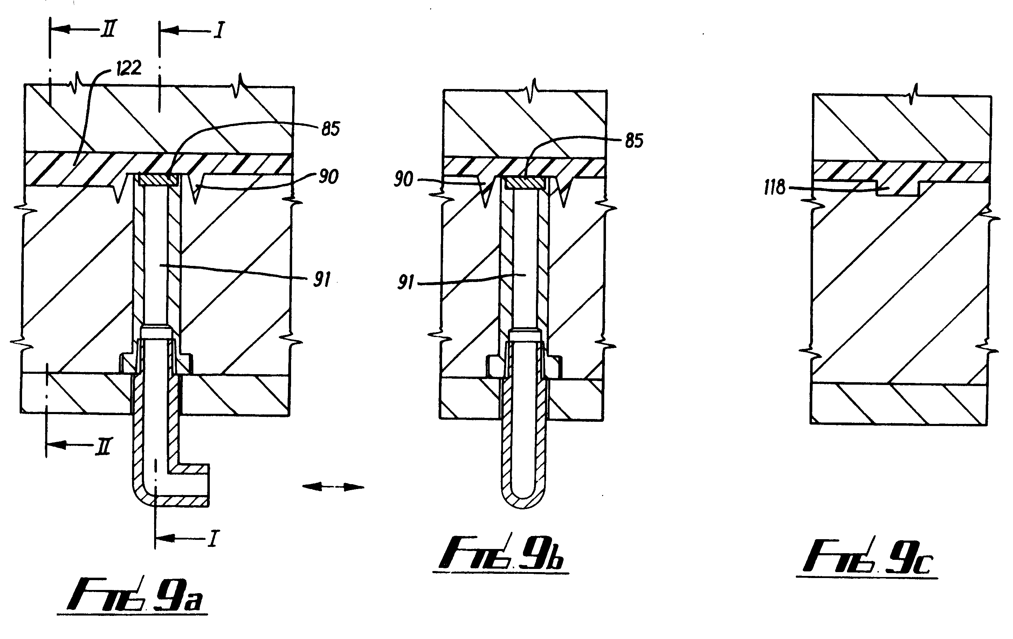

In the case of multi-cavity moulds each cavity may be fed with a separate gas feed point either within each moulded article or within a plastic feed runner to each mould cavity. The gas feed points may be connected to a common gas channel within the mould thereby equalising the gas pressure and timing of gas injection to each feed point. Alternatively each gas feed may be individually controlled with separate gas feed channels thereby enabling the gas pressure and timing of injection to be varied separately. As described above gas is injected at positions within feed runners or in cored-out holes within the moulded article. As a further embodiment of the invention the gas may be injected into the plastic at outflows of the plastic in one or more positions within the mould but outside the feed runners or moulded article (as shown at 71 on Figures 7a and 7b). This is achieved by including in the mould external outflow runners to form plastic circular seals 73 around gas entry/exit points 75. This enables gas pressure to be applied at positions remote from the plastic feed point and may enable gas channels 76 to be formed within the moulded article 77 at extremities of the moulding or in other positions where it is not practical to inject gas directly into the moulded article.

The injection moulding method comprises the following steps in sequence:-
1. Commencement of the injection of molten plastic from the moulding machine injection cylinder through machine nozzle into the mould via sprues 22, hot and cold runners 23 and into the mould cavity or cavities 26.
2. As soon as the plastic flows completely around a gas feed point forming an effective seal the gas injection can commence so that the gas (preferably nitrogen) will flow through the channels 4 within the mould and then between the mould shut-out surfaces 9 and once the gas pressure is higher than the local pressure within the plastic the gas will flow into the molten plastic 10 and will form continuous hollow channels 14. The plastic and gas may then flow together until the mould cavity is filled with plastic and gas. It is normal practice for a controlled volume of plastic to be injected which is similar to or less than the mould cavity volume.
   Alternatively the gas may not be injected until the mould cavity is filled with plastic, following which the gas is injected and will create cavities as continuous hollow sections 14 within the plastic as the plastic cools and shrinks volumetrically.
3. The pressure within the gas is stabilised and controlled from the source 3 during the cooling period in the moulding cycle.
4. When the plastic is cooled and has solidified the gas pressure may be relieved and the gas is exhausted via the path of entry between the relieved shut-out faces and vent areas 15, and through relief valves at the gas source 3.
5. In some mouldings it may be preferable for the plastic to be injected into outflows forming a seal around a gas injection point, thereby enabling gas pressure to be applied to areas of mouldings remote from the plastic feed point or other gas injection positions.
6. The mould is then opened and the moulding is ejected.

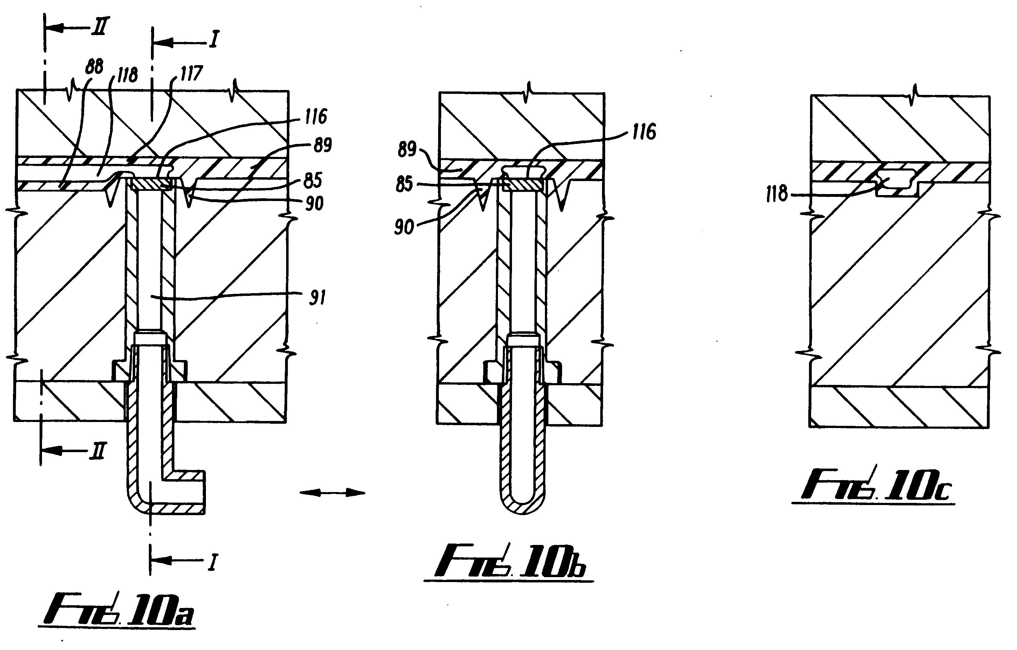

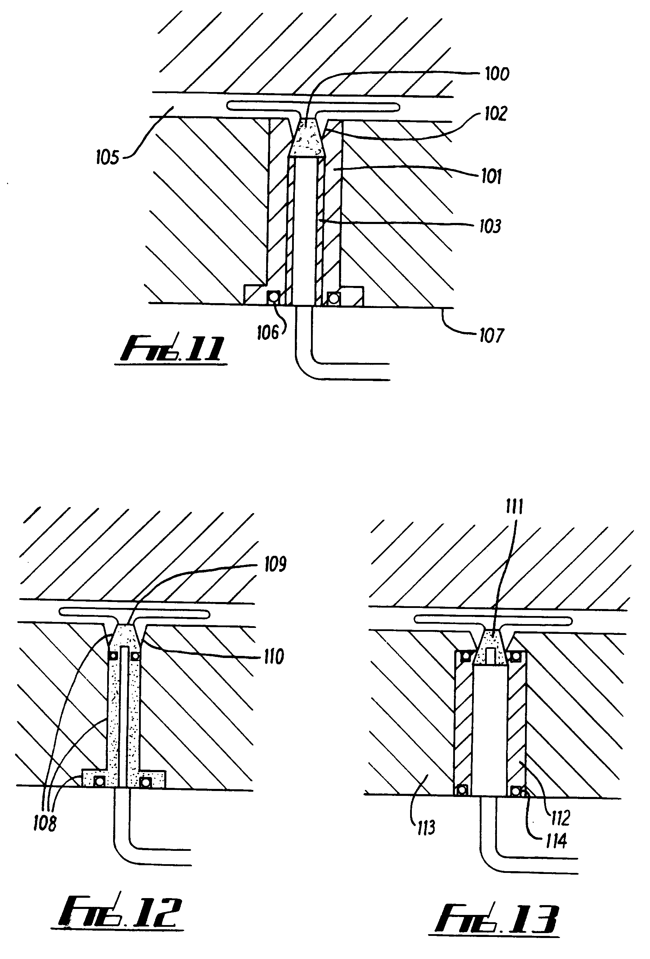

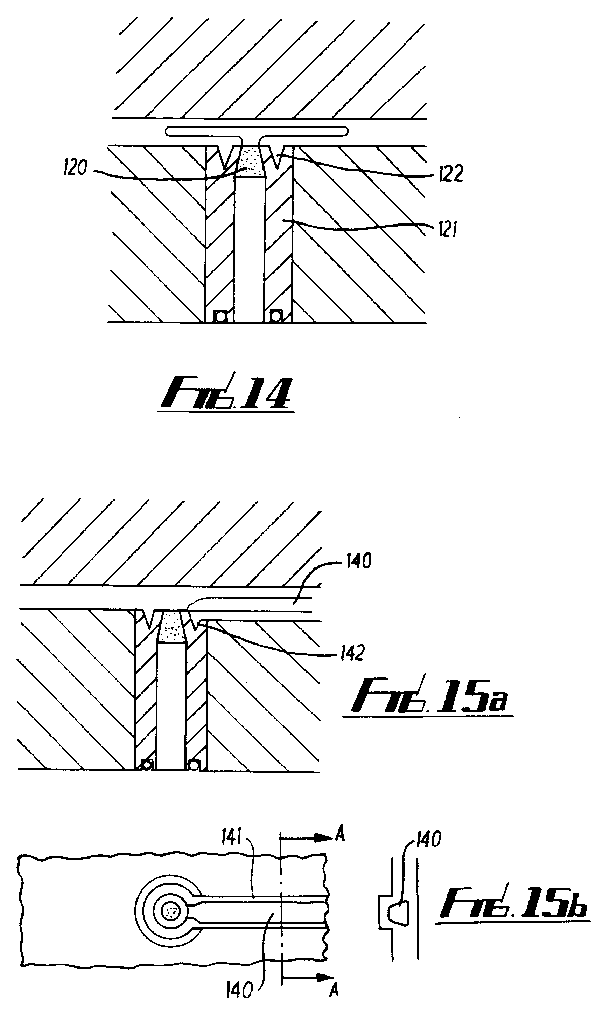

With reference to Figures 8, 9a, 9b, 9c, 10a, 10b and 10c, gas 80, preferably nitrogen, is injected into the molten plastic 81 within a mould 82 either directly into the moulded article 83 or into the plastic feed runners, through porous inserts 84 and 85 fixed into the mould cavity surface and positioned so that the gas flows through the porous material, and then penetrates the outer skin 86 of the plastic formed over the insert, and then flows into the molten plastic 81 and 87 before the plastic is cooled and transformed from a molten into a solid state. The gas injection point is referenced 121. Reference 122 indicates a thicker section rib.

The porous inserts are normally, but not essentially, positioned proud of the surrounding mould cavity surface 88 in order that the gas may more easily penetrate the skin which forms over the insert. Having penetrated the skin the gas flows into the molten plastic 89 and follows the path of least resistance, which is in the thicker and therefore hotter and less viscous molten plastic within the moulding.

Each gas injection position should be surrounded by plastic and preferable that a thicker section 90 should surround each gas injection point thereby forming a seal preventing the gas escaping or leaking to atmosphere from he mould, and preventing the gas forming a gas film or layer between the plastic and the adjacent mould cavity surface.

As a further explanation of the method of forming an effective seal to prevent the leakage of gas across the surface of the plastic and between the plastic surface and the adjacent mould cavity surface, the plastic surrounding the porous metal insert and gas exit from the insert, an up-standing continuous ring of plastic, normally but not essentially in the form of a triangular cross section is formed within close proximity to the gas exit point. If the gas tends to leak and flow between the plastic surface and the adjacent mould surface, it will create an additional pressure on the inside surface of the upstanding triangular section thereby forcing the plastic within the triangular section against the opposite surface and thereby creating a seal which will prevent the further flow of gas. Once the gas has been prevented from flowing across the surface of the plastic, pressure will be created within the gas, and when the pressure exceeds the pressure within the plastic and is sufficient to break through a skin of plastic formed across the porous metal insert, the gas will flow into the plastic and follow the path of least resistance forming hollow continuous channels within the thicker section(s) of the plastic.

Having penetrated the skin of plastic the gas flows into the mould forming continuous hollow sections or channels within the molten plastic in a similar way to other well known gas-assisted moulding practice.

After the plastic has cooled and solidified the external gas pressure is released to atmosphere and the gas within the cavity is exhausted via the path of entry, i.e. through the porous inserts and then through the sealed channels 91 within the mould construction.

The porous material is sufficiently porous to enable the gas to pass freely through it but so as not to enable the ingress of more viscous plastic into the porous metal. The selection of the appropriate grade of sintered porous material will be dependent on the plastic to be moulded and in particular the viscosity of the plastic when in its molten condition. It is preferable that the porous material should be sintered metal, normally stainless steel or bronze, of a particle size between 5.0 and 30.0 microns.

The plastics should not adhere to the porous insert after the moulding has been formed and ejection from the mould. The surface of the sintered metal should therefore be smooth and without cavities into which plastic can flow. As a result the surface of the porous metal insert is cleared of all plastic and other debris after each moulding cycle and during the ejection of the moulding. The metal insert is then free of any blockage or debris prior to the following moulding cycle and injection of gas.

In some cases it may be preferable to direct the flow of gas from a porous insert by sealing the surface of part of the porous insert thereby forcing the gas to pass through the remaining unsealed surface. The surface of porous sintered metal components can be sealed or closed by machining, or grinding, the surface.

Three examples are illustrated in Figures 11, 12 and 13. In each case the outer peripheral surface of the truncated cone porous metal insert located at a gas exit point in the mould has been machined or ground in order to seal the surface to prevent the passage of gas through the machined surface. As a result the gas will pass only through the flat tip of the truncated cone into the plastic as illustrated. A triangular shaped seal of plastic has been formed around the truncated cone between the outer surface of the cone and a machine surface of the mould or insert in the mould.

Figure 11 shows an example of a porous metal insert shaped as a truncated cone 100 which is located and fitted into a cylindrical metal insert 101 which has also been shaped to provide the other surface of the cone insert 102. The cone insert is retained in position by another cylindrical steel insert 103, located within the bore of the outer insert in order to prevent the movement of the sintered metal insert 104 in a downwards direction by pressure which might be exerted by the plastic 105 within the mould cavity. Also illustrated is the use of a circular o-seal 106 to prevent the leakage of gas between the insert and the mould locating plate 107.

Figure 12 is a further illustration of the use of a sintered metal insert which has been machined on surfaces 108 in order to prevent the escape of gas from within the insert. As a result the gas will be directed to pass through the tip of the truncated cone section 109 and into the molten plastic material. Figure 12 also illustrates the formation of the plastic seal surrounding the gas exit point by forming the second surface of the seal 110 in the mould cavity surface.

Figure 13 is another illustration of a truncated cone shaped porous metal insert Ill located and fitted into a cylindrical insert 112, which in turn is fitted into the mould tool plate 113 and sealed with o-seals 114 at the top and bottom of the insert.

Figure 14 illustrates a method of locating the porous metal insert 120 within a cylindrical metal insert 121 which can be fitted into the mould. It also illustrates the inclusion of the plastic seal as further embodiment of this invention the integrally moulded seal 122 is formed entirely within the cylindrical insert.

Figure 15a and 15b illustrate the flow of gas 140 from a porous metal insert surrounded by an integrally moulded seal 141 and the gas flowing towards and into the thicker section provided by the rib 142. The gas 140 will flow following the path of least resistance, which in this case is towards and into the thicker channel or rib, having penetrated the inside face of the integrally moulded seal 141 in a position adjacent to the rib 142.

An important feature of these embodiments is the simplicity of the insertion of the porous metal inserts and the feeding of gas from drilled sealed channels 104 and 91 within the mould. Compared with other known methods of inserting valve assemblies and other moving mechanisms or nozzles, very little space within the mould construction and comparatively inexpensive changes to the mould design are required. The invention therefore facilitates multi gas injection positions which make it easier and less expensive to provide each cavity of a multi cavity mould with a separate gas injection point. Also larger and more complex mouldings may be supplied with gas at multiple gas injection points thereby increasing the scope and effectiveness of gas-assisted moulding.

Gas injection points may be fed from a common feed channel or source thereby equalising gas injection pressures and timing at each gas injection point. Conversely it is comparatively easy to individually control the pressure and timing of gas feed to each gas injection position by having separate gas feed channels controlled individually for timing and pressure of gas injection.

A further important function of the porous metal inserts is that of filtering the gas thereby preventing the passage of dust or debris into the plastic during the injection of the gas and conversely preventing the passage of plastic or other particles back into the gas supply feed channels, gas source, and control valves, which could impair the function of the gas injection equipment.

The injection moulding method comprises the following steps in sequence:-
1. The injection moulding process commences with the closing of the mould 82 which is secured on the moulding machine press platens 110.
2. The injection of molten plastic from the moulding machine injection cylinder 111 through the machine nozzle 112 and the mould sprue 113 into the mould cavity space 114 until such time that the mould cavity is just less than filled.
3. The gas, preferably nitrogen, is injected via sealed channels 115 within the mould through the porous sintered metal inserts 84. Timing of the gas injection is carefully controlled but does not commence until the plastic has flowed over each gas injection point. When the gas pressure is higher than the local pressure within the plastic, the gas penetrates the skin of plastic 116 formed over the porous-insert 85 and flows into the molten plastic 117 finding the path of least resistance in the middle of the thicker sections 118 where the plastic is least viscous. The gas injected creates cavities as continuous hollow sections or channels within the plastic as it cools and shrinks volumetrically.
4. The pressure within the gas is stabilised and controlled from the external source 119 during the cooling period in the moulding cycle when the plastic is being transformed from a molten into a solid state. The gas pressure is urged onto the plastic forcing the plastic against the mould cavity surfaces thereby improving the replication of the mould cavity surfaces onto the moulded article.
5. After the plastic has become solid the gas is vented from the moulding via the path of entry through the porous metal inserts 85, into the sealed gas channels 120 within the mould and to atmosphere or to a gas collection chamber in order that the gas may be recycled in subsequent moulding operations.
6. The mould is opened and the moulding is ejected. Completion of the gas venting may be made as the mould starts to open and when the a gap is created between the plastic and the porous metal insert.

It will be appreciated that the above embodiment has been described by way of example only and that many variations are possible without departing from the scope of the invention.

## Claims

1. Apparatus for injection moulding comprising a mould having two parts (1 and 2) which may be placed together to define a mould cavity (26), means (21) for feeding synthetic plastics material to the mould cavity, means (3) for feeding gas under pressure to the mould cavity at a position displaced from the means for feeding synthetic plastics material such that the gas can be injected into the synthetic plastics material and for exhausting gas from the mould cavity, said means for feeding gas comprising means (9,60) permitting passage of gas whilst preventing passage of synthetic plastics material characterised in that the mould has a formation around the means for feeding gas such that in operation of the mould a seal is formed by the synthetic plastics material to prevent the gas from escaping between the plastics and adjacent mould surface.

2. Apparatus as claimed in claim 1, in which the means for permitting passage of gas whilst preventing passage of synthetic plastics materials comprises a gap between shut out faces of adjacent mould parts which permits passage of gas but prevent passage of plastics.

3. Apparatus as claimed in claim 1, in which the means for permitting passage of gas whilst preventing passage of synthetic plastics material comprises a porous insert (60).

4. Apparatus as claimed in claim 1, in which the formation defines a ring which surrounds the gas injection point.

5. A method of injection moulding including the steps of feeding synthetic plastics material to a mould cavity defined by a mould having two parts, feeding gas to the mould cavity under pressure at a position displaced from the plastics material feed whereby to pressurise plastics material in the mould and inject gas into the material, preventing plastics material from entering the gas feed, and exhausting the gas from the mould and opening the mould to remove the moulded product characterised in that gas is prevented from escaping between the plastics and adjacent mould surface by gas pressure urging synthetic plastics material against a mould surface to produce a seal.

6. A method as claimed in claim 5, in which the pressure of the gas is controlled in order to assist the moulding process.

7. A method as claimed in claim 5 or 6, in which the timing of injection of the gas is controlled.

8. A method as claimed in claim 5, 6 or 7, in which gas pressure is applied within a sealed area to transmit pressure to plastics material outside that area to urge plastic material to compensate for shrinkage.

## Patentansprüche

1. Spritzgießvorrichtung mit einer Form mit zwei Formhälf` ten (1) und (2), die zusammenführbar sind, um eine Formkavität (26) zu begrenzen, Mitteln (21) zum Zuführen von Kunststoffmaterial zu der Formkavität, Mitteln (3) zum Zuführen von Gas unter Druck zu der Formkavität an einer von den Mitteln zum Zuführen des Kunststoffmaterials versetzten Stelle derart, daß das Gas in das Kunststoffmaterial injiziert werden kann, und zum Abführen von Gas aus der Formkavität, wobei die Mittel zum Zuführen von Gas Mittel (9, 60) aufweisen, die einen Gasdurchtritt gestatten und einen Durchtritt des Kunststoffmaterials verhindern, dadurch **gekennzeichnet,** daß die Form um die Mittel zum Zuführen des Gases herum eine solche Formgebung hat, daß bei Betrieb der Form eine Dichtung durch das Kunststoffmaterial gebildet wird, die ein Entweichen des Gases zwischen dem Kunststoff und der benachbarten Formoberfläche verhindert.

2. Vorrichtung nach Anspruch 1,
bei der die Mittel zum Gestatten des Gasdurchtritts zum Verhindern des Durchtritts von Kunststoffmaterial einen Spalt zwischen Absperrflächen von benachbarten Formteilen aufweisen, der einen Durchtritt von Gas gestattet und einen Durchtritt von Kunststoff verhindert.

3. Vorrichtung nach Anspruch 1,
bei der die Mittel zum Gestatten des Durchtritts von Gas und zum verhindern des Durchtritts von Kunststoff einen porösen Einsatz aufweisen.

4. Vorrichtung nach Anspruch 1,
bei der die Formgebung einen Ring definiert, der die Gasinjektionsstelle umgibt.

5. Verfahren zum Spritzgießen mit den Schritten:
Zuführen von Kunststoffmaterial zu einer Formkavität, die von einer Form mit zwei Formhälften definiert wird, Zuführen von Gas zur Formkavität unter Druck an einer Stelle, die von der Zuführstelle des Kunststoffmaterials versetzt ist, um das Kunststoffmaterial in der Form unter Druck zu setzen und Gas in das Material zu injizieren, Verhindern des Eintritts von Kunststoffmaterial in die Gaszuführung, und Abführen des Gases aus der Form und Öffnen der Form zum Entnehmen des geformten Produkts, dadurch **gekennzeichnet,** daß ein Gasaustritt zwischen dem Kunststoff und der benachbarten Formoberfläche dadurch verhindert wird, daß der Gasdruck Kunststoffmaterial gegen eine Formoberfläche andrückt, um eine Abdichtung zu bilden.

6. Verfahren nach Anspruch 5,
bei der der Druck des Gases gesteuert wird, um den Spritzgießvorgang zu unterstützen.

7. Verfahren nach Anspruch 5 oder 6,
bei dem der Zeitpunkt der Injektion des Gases gesteuert wird.

8. Verfahren nach Anspruch 5, 6 oder 7,
bei dem Gasdruck innerhalb eines abgedichteten Bereiches aufgebracht wird, um Druck auf Kunststoffmaterial außerhalb dieses Bereiches zu übertragen, um Kunststoffmaterial zum Ausgleich von Schrumpt nachzuschieben.

## Revendications

1. Appareil de moulage par injection, comprenant un moule en deux parties (1 et 2) qui peuvent être placées ensemble pour définir une cavité de moule (26), des moyens (21) d'alimentation de la cavité de moule en matériau plastique synthétique, des moyens (3) d'alimentation de la cavité de moule en gaz sous pression en une position décalée par rapport aux moyens d'alimentation en matériau plastique synthétique, de sorte que le gaz peut être injecté dans le matériau plastique synthétique, et d'évacuation du gaz de la cavité de moule, lesdits moyens d'alimentation en gaz comprenant des moyens (9, 60) qui permettent le passage du gaz tout en empêchant le passage du matériau plastique synthétique, caractérisé par le fait que le moule présente une formation autour des moyens d'alimentation en gaz, de sorte que, pendant le fonctionnement du moule, le matériau plastique synthétique forme un joint pour empêcher le gaz de s'échapper entre le plastique et la surface adjacente du moule.

2. Appareil selon la revendication 1, dans lequel les moyens qui permettent le passage du gaz tout en empêchant le passage du matériau plastique synthétique comprennent un espace entre des surfaces de fermeture de parties adjacentes du moule, qui permet le passage du gaz mais empêche le passage du plastique.

3. Appareil selon la revendication 1, dans lequel les moyens qui permettent le passage du gaz tout en empêchant le passage du matériau plastique synthétique comprennent un insert poreux (60).

4. Appareil selon la revendication 1, dans lequel la formation définit un anneau qui entoure le bec d'injection du gaz.

5. Procédé de moulage par injection, comprennent les étapes qui consistent à alimenter en matériau plastique synthétique une cavité de moule définie par un moule en deux parties, à alimenter la cavité de moule en gaz sous pression en une position décalée de l'arrivée de matériau plastique pour ainsi mettre en pression le matériau plastique dans le moule et injecter du gaz dans le matériau en empêchant le matériau plastique d'entrer dans l'arrivée de gaz, et à évacuer le gaz du moule et ouvrir le moule pour retirer le produit moulé, caractérisé par le fait que le gaz est empêché de s'échapper entre le plastique et la surface adjacente du moule par le pression du gaz qui repousse le matériau plastique synthétique contre la surface du moule pour former un joint.

6. Procédé selon la revendication 5, dans lequel la pression du gaz est commandée pour aider le processus de moulage.

7. Procédé selon la revendication 5 ou 6, dans lequel le rythme d'injection du gaz est commandé.

8. Procédé selon le revendication 5, 6 ou 7, dans lequel la pression gazeuse est appliquée dans une zone fermée pour transmettre la pression au matériau plastique hors de cette zone pour repousser le matériau plastique afin de compenser son rétrécissement.
